# FASCICULE DE BREVET EUROPEEN

(11) **EP 1 190 879 B1**
(45) Date de publication et mention de la délivrance du brevet: **10.09.2003**
(21) Numéro de dépôt: 00810872.2
(22) Date de dépôt: 22.09.2000
(51) Int. Cl.: B60H 3/00, G01N 33/00

(54) **Système de commande de la ventilation d'un véhicule**
Steueranlage eines Luftkonditionierungssystems eines Fahrzeugs
Control system for the ventilation of a vehicle

(43) Date de publication de la demande: 27.03.2002
(73) Titulaire: Microchemical Systems S.A., 2035 Corcelles (CH)
(72) Inventeur: Berthoud, Christophe, 1206 Genève (CH)
(74) Mandataire: Gresset, Jean

(56) Documents cités:
- DE-A- 3 304 324
- DE-A- 4 414 594
- DE-A- 19 634 566

## Description

La présente invention concerne un système de commande de la ventilation d'un véhicule. Il s'agit, plus précisément, d'un système qui mesure le niveau de pollution à l'extérieur du véhicule et agit, en conséquence, sur son mécanisme de commande de la ventilation de manière à interdire l'admission dans l'habitacle d'air dont le niveau de pollution dépasse une valeur donnée.

Le brevet DE 33 04 324 décrit, par exemple, un système de ce type, dans lequel l'arrivée d'air extérieur est coupée lorsque l'écart entre le signal fourni par un capteur de pollution et une valeur de référence formée par la moyenne du signal lui-même dépasse un niveau donné.

De nombreux tests effectués sur le terrain, dans des conditions de trafic réel, ont montré que, pour être efficace, le système doit être capable de réagir:
- d'une part, à un pic de pollution, comme c'est le cas, par exemple, au moment du redémarrage à un feu rouge dans une file de véhicules, mais,
- d'autre part, à une lente montée de la pollution, comme c'est le cas, par exemple, à l'entrée d'un tunnel.

Le risque d'un système n'utilisant qu'une seule valeur de référence est de se trouver mis en défaut dans l'une ou l'autre des situations ci-dessus. Si la référence est une moyenne du signal de mesure prise sur un trop court intervalle de temps, le système ne répondra pas à une lente augmentation du niveau de pollution. Si, au contraire, la référence est une moyenne prise sur un trop long intervalle, le système répondra mal à un pic rapide de pollution.

La présente invention a donc pour but de fournir un système amélioré qui permet de faire face à la fois à des montées rapides et à des montés lentes de la pollution.

De façon plus précise, pour atteindre ce but, le système de commande selon l'invention est du type comportant au moins un capteur de gaz qui délivre un signal représentatif du niveau de pollution de l'air ambiant et un circuit électronique qui répond à ce signal en agissant sur l'unité de commande du volet d'admission d'air du véhicule afin d'éviter l'entrée d'air dont le niveau de pollution dépasse un niveau donné. Ce système est caractérisé en ce que son circuit électronique comporte:
- des moyens pour obtenir, à intervalles réguliers, des mesures de l'amplitude du signal (R,O) délivré par le capteur de gaz,
- des moyens pour calculer une première valeur de référence constituée par moyenne (SMR, SMO), dite moyenne courte, de ces mesures sur un premier intervalle de temps et une deuxième valeur de référence constituée par la moyenne (LMR, LMO), dite moyenne longue, desdites mesures sur un deuxième intervalle de temps, supérieur au premier,
- des moyens pour calculer un premier écart (ΔSR, ΔSO) entre chaque mesure et la moyenne courte (SMR, SMO) et un deuxième écart (ΔLR, ΔLO) entre chaque mesure et la moyenne longue (LMR, LMO), et
- des moyens de décision pour comparer lesdits premier (ΔSR, ΔSO) et deuxième (ΔLR, ΔLO) écarts à des valeurs seuil (SCR, LCR, SCO, LCO, LOR et LOO) et, selon le résultat des comparaisons, envoyer à ladite unité de commande un ordre d'ouverture ou de fermeture du volet d'admission d'air.

De façon avantageuse, lesdits moyens de décision sont agencés pour effectuer la succession des opérations suivantes:
- envoi d'un ordre de fermeture du volet si le premier écart (ΔSR, ΔSO) dépasse une première valeur seuil (SCR, SCO) ou si le deuxième écart (ΔLR, ΔLO) dépasse une deuxième valeur seuil (LCR, LCO), ces deux valeurs seuil correspondant à un accroissement de pollution inacceptable,
- envoi d'un ordre d'ouverture du volet si le premier écart (ΔSR, ΔSO) ne dépasse pas ladite première valeur seuil (SCR, SCO) et si le deuxième écart (ΔLR, ΔLO) ne dépasse pas ladite deuxième valeur seuil (LCR, LCO) et si, alors, le deuxième écart (ΔLR, ΔLO) dépasse une troisième valeur seuil (LOR, LOO) correspondant à une diminution de pollution acceptable, et
- envoi d'un ordre de maintien du volet dans son état si le premier écart (ΔSR, ΔSO) ne dépasse pas ladite première valeur seuil (SCR, SCO) et si le deuxième écart (ΔLR, ΔLO) ne dépasse pas ladite deuxième valeur seuil (LCR, LCO) et si, alors, le deuxième écart (ΔLR, ΔLO) ne dépasse pas ladite troisième valeur seuil (LOR, LOO).

Selon un mode de réalisation préféré, les intervalles auxquels sont obtenues des mesures de l'amplitude du signal (R, O) délivré par le détecteur sont de 100 ms. Typiquement, le premier intervalle est alors de 3,2 s et le deuxième intervalle de 12,8 s.

De façon particulièrement avantageuse, le système comporte un capteur de gaz réducteurs et un capteur de gaz oxydants.

D'autres caractéristiques et avantages de l'invention ressortiront de la description qui va suivre, faite en regard des dessins annexés, dans lesquels:
- la figure 1 est un schéma d'ensemble du système selon l'invention; et
- la figure 2 représente le diagramme des opérations effectuées par son microprocesseur.

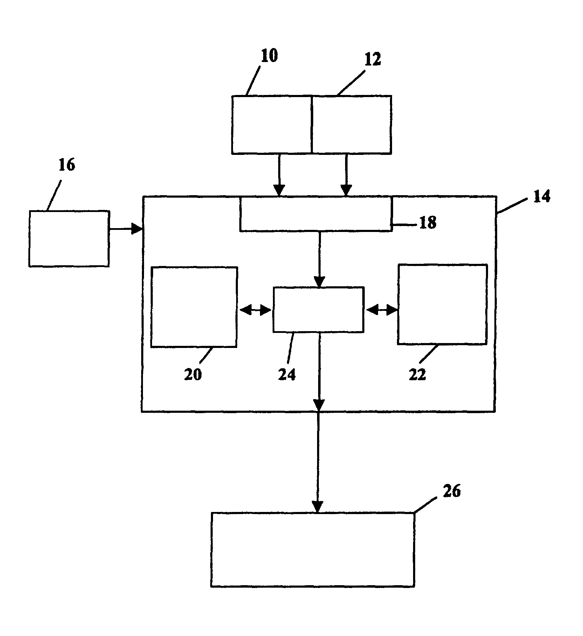

On se référera, tout d'abord, à la figure 1 qui montre en 10 et 12 respectivement un capteur de gaz réducteurs et un capteur de gaz oxydants. Le capteur de gaz réducteurs 10 répond principalement au monoxyde de carbone (CO) mais aussi, notamment, au monoxyde d'azote (NO), aux hydrocarbures non brûlés (HC), à l'acide sulfhydrique (H2S), au méthane (CH4), au méthanol (C2H5OH) et au sulfure de carbone (CS). Le capteur de gaz oxydants 12 répond principalement au dioxyde d'azote (NO2) mais aussi, notamment, au dioxyde de soufre (SO2) et à l'Ozone (03).

Les capteurs 10 et 12 sont avantageusement du type décrit dans la demande PCT / CH00 / 00349 bénéficiant de la date de dépôt du 2 juillet 1999. Ils délivrent respectivement un signal R d'amplitude représentative de la teneur de l'air ambiant en gaz réducteurs et un signal O d'amplitude représentative de la teneur de l'air ambiant en gaz oxydants.

Les signaux R et O sont appliqués à l'entrée d'un micro-processeur 14 relié à une source d'alimentation 16 et comportant, de manière classique, un convertisseur analogique-numérique 18, une mémoire ROM 20, une mémoire RAM 22 et une unité de calcul 24.

Le microprocesseur 16 délivre, à sa sortie, un signal destiné à être appliqué à l'unité de commande de la ventilation d'un véhicule 24 pour ouvrir ou fermer son volet d'admission d'air.

Les principales opérations effectuées par le microprocesseur 16 sont les suivantes:
- acquisition des signaux R et O, typiquement toutes les 100 ms;
- calcul des moyennes SMR et SMO des 32 dernières mesures de R et de O (SM = short mean = moyenne courte) et des moyennes LMR et LMO des 128 dernières mesures de R et de O (LM = long mean = moyenne courte);
- calcul des écarts suivants, ci-après les deltas:
   . R - SMR = ΔSR
   . O - SMO = ΔSO
   . R - LMR = ΔLR
   . O - LMO = ΔLO
- comparaison de ces 4 deltas à 6 valeurs seuil (précisées plus loin) stockées dans la mémoire ROM 20 et, selon le résultat des comparaisons, envoi à l'unité de commande 26 de l'ordre de fermeture ou d'ouverture du volet d'admission d'air dans le véhicule.

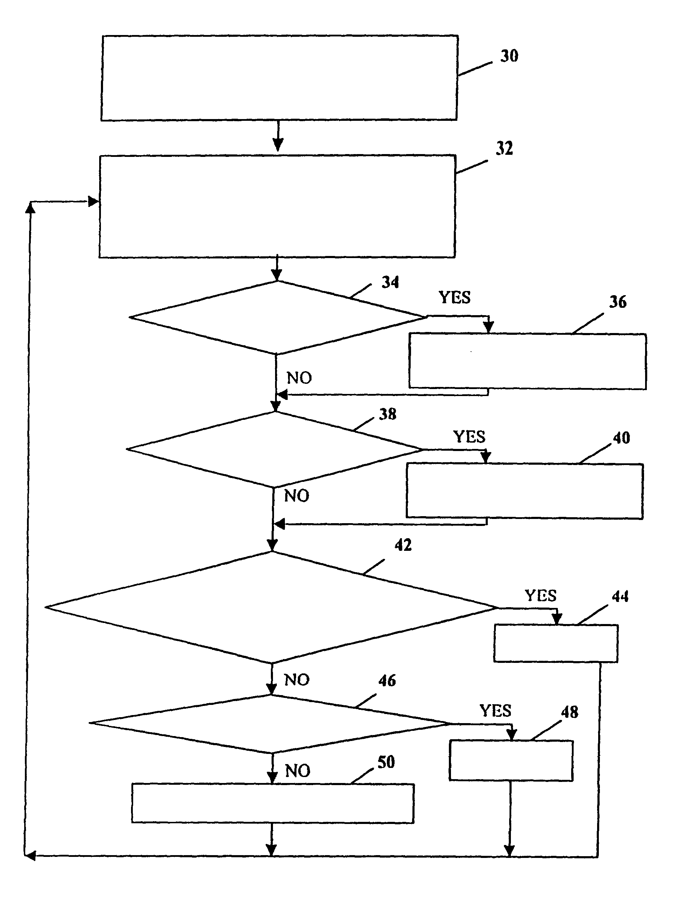

On se référera maintenant à la figure 2 qui montre, avec plus de détail, la manière dont travaille le microprocesseur 16.

Comme représenté en 30, le système démarre au moment de la mise en marche du véhicule, le volet d'admission étant ouvert. A cet instant, dans la RAM 22, les 4 moyennes SMR, SMO, LMR et LMO sont à 0, de même que les 4 deltas ΔSR, ΔSO, ΔLR et ΔLO.

Au terme d'une durée d'environ 45 secondes, nécessaire pour permettre que les deux capteurs 10 et 12 atteignent leur température de fonctionnement, le système va effectuer, toutes les 100 ms, un cycle d'opérations dont le premier groupe, illustré en 32, comporte:
- la mesure des signaux R et O, leur conversion en numérique à l'aide du convertisseur 18 et l'accumulation de leurs valeurs dans la RAM 22; et
- le calcul des 4 deltas ΔSR, ΔSO, ΔLR et ΔLO suivi de leur enregistrement dans la RAM 22 à la place de leurs valeurs précédentes.

L'opération suivante, montrée en 34, consiste à déterminer si le nombre de valeurs mesurées est un multiple de 32. Si tel est le cas, c'est à dire toutes les 3,2 secondes, le système procède, en 36, à une division par 32 des valeurs accumulées de R et de O pour obtenir la nouvelle valeur des moyennes SMR et SMO qui remplacent, dans la RAM 22, les valeurs précédentes. Le système passe alors à l'opération suivante 38. Si, par contre, le nombre de valeurs mesurées n'est pas un multiple de 32, le système va directement à l'opération 38.

Cette opération 38 consiste à déterminer si le nombre de valeurs mesurées est un multiple de 128. Si tel est le cas, c'est à dire toutes les 12,8 secondes, le système procède, en 40, à une division par 128 des valeurs accumulées de R et de O pour obtenir la nouvelle valeur des moyennes LMR et LMO qui remplacent, dans la RAM 22, les valeurs précédentes. Le système passe alors à l'opération suivante 42. Si, par contre, le nombre de valeurs mesurées n'est pas un multiple de 128, le système va directement à l'opération 42.

Cette opération 42 consiste à poser les quatre questions suivantes:
- ΔSR > SCR ?
- ΔLR > LCR ?
- ΔSO > SCO ?
- ΔLO>LCO?

SCR, LCR, SCO et LCO sont quatre des six valeurs seuil stockées dans la ROM 20, qui représentent respectivement les valeurs des deltas ΔSR, ΔSO, ΔLR et ΔLO correspondant à un accroissement de pollution inacceptable. Ces valeurs seuil sont déterminées sur la base de mesures expérimentales et peuvent être modifiées en fonction des exigences du constructeur du véhicule.

Si la réponse à l'une, au moins, des quatre questions posées en 42 est OUI (YES), ce qui signifie que le niveau de pollution dépasse l'un des seuils convenus, le système donne, en 44, l'ordre de fermer - ou de laisser fermé - le volet d'admission d'air, ce qui constitue la dernière des opérations du cycle, avant qu'un nouveau cycle démarre, au bout de 100 ms, par l'opération 32.

Si, par contre, la réponse aux quatre questions posées en 42 est NON (NO), ce qui signifie que les quatre seuils de pollution concernés ne sont pas dépassés, le système passe alors à l'opération 46 qui consiste à poser les deux questions suivantes:
- ΔLR > LOR ?
- ΔLO > LOO ?

LOR et LOO sont les deux autres valeurs seuil stockées dans la ROM 20, qui représentent respectivement les valeurs des deltas ΔLR et ΔLO correspondant à une diminution de pollution acceptable.

Si la réponse à l'une, au moins, des deux questions posées en 46 est OUI (YES), le système donne, en 48, l'ordre d'ouvrir - ou de laisser ouvert - le volet d'admission d'air, ce qui constitue la dernière des opérations du cycle.

Si, par contre, la réponse aux deux questions posées en 46 est NON (NO), le système donne l'ordre, en 50, de laisser le volet dans son état, qu'il soit fermé ou ouvert, avant de repartir pour un nouveau cycle en 32.

Ainsi donc est réalisé un système qui, à la différence des systèmes connus, utilise deux valeurs de référence pour les signaux provenant respectivement du capteur de gaz réducteurs et du capteur de gaz oxydants. La valeur de référence constituée par la moyenne "courte" (SMR, SMO) des mesures sur un intervalle de temps de 3,2 s permet au système de réagir à des pics de pollution auxquels il serait insensible si la référence correspondait à la moyenne des mesures sur un long intervalle de temps. Par contre, la valeur de référence constituée par la moyenne "longue" (LMR, LMO) des mesures sur un intervalle de temps de 12,8 s donne au système la possibilité de répondre à une lente montée de la pollution à laquelle il ne réagirait pas si la référence correspondait à la moyenne des mesures sur un court intervalle de temps.

## Revendications

1. Système de commande de la ventilation d'un véhicule, comportant au moins un capteur de gaz (10, 12) qui délivre un signal (R, O) représentatif du niveau de pollution de l'air ambiant et un circuit électronique (14, 16) qui répond audit signal en agissant sur l'unité de commande du volet d'admission d'air du véhicule (26) afin d'éviter l'entrée d'air dont le niveau de pollution dépasse un niveau donné, **caractérisé en ce que** ledit circuit comporte:
- des moyens pour obtenir, à intervalles réguliers, des mesures de l'amplitude du signal (R, O) délivré par le capteur,
- des moyens pour calculer une première valeur de référence constituée par la moyenne (SMR, SMO), dite moyenne courte, desdites mesures sur un premier intervalle de temps et une deuxième valeur de référence constituée par la moyenne (LMR, LMO), dite moyenne longue, desdites mesures sur un deuxième intervalle de temps, supérieur au premier,
- des moyens pour calculer un premier écart (ΔSR, ΔSO) entre chaque mesure et la moyenne courte (SMR, SMO) et un deuxième écart (ΔLR, ΔLO) entre chaque mesure et la moyenne longue (LMR, LMO), et
- des moyens de décision pour comparer lesdits premier (ΔSR, ΔSO) et deuxième (ΔLR, ΔLO) écarts à des valeurs seuil (SCR, LCR, SCO, LCO, LOR et LOO) et, selon le résultat des comparaisons, envoyer à ladite unité de commande un ordre d'ouverture ou de fermeture du volet d'admission d'air.

2. Système selon la revendication 1, **caractérisé en ce que** lesdits moyens de décision sont agencés pour effectuer la succession des opérations suivantes:
- envoi d'un ordre de fermeture du volet si le premier écart (ΔSR, ΔSO) dépasse une première valeur seuil (SCR, SCO) ou si le deuxième écart (ΔLR, ΔLO) dépasse une deuxième valeur seuil (LCR, LCO), ces deux valeurs seuil correspondant à un accroissement de pollution inacceptable,
- envoi d'un ordre d'ouverture du volet si le premier écart (ΔSR, ΔSO) ne dépasse pas ladite première valeur seuil (SCR, SCO) et si le deuxième écart (ΔLR, ΔLO) ne dépasse pas ladite deuxième valeur seuil (LCR, LCO) et si, alors, le deuxième écart (ΔLR, ΔLO) dépasse une troisième valeur seuil (LOR, LOO) correspondant à une diminution de pollution acceptable, et
- envoi d'un ordre de maintien du volet dans son état si le premier écart (ΔSR, ΔSO) ne dépasse pas ladite première valeur seuil (SCR, SCO) et si le deuxième écart (ΔLR, ΔLO) ne dépasse pas ladite deuxième valeur seuil (LCR, LCO) et si, alors, le deuxième écart (ΔLR, ΔLO) ne dépasse pas ladite troisième valeur seuil (LOR, LOO).

3. Système selon l'une des revendications 1 et 2, **caractérisé en ce que** les intervalles auxquels sont obtenues des mesures de l'amplitude du signal (R, O) délivré par le détecteur sont de 100 ms.

4. Système selon la revendication 3, **caractérisé en ce que** ledit premier intervalle est de 3,2 s et ledit deuxième intervalle de 12,8 s.

5. Système selon l'une des revendications 1 à 4, **caractérisé en ce qu'**il comporte un capteur de gaz réducteurs et un capteur de gaz oxydants.

## Patentansprüche

1. System zur Steuerung der Lüftung eines Fahrzeugs, bestehend aus mindestens einem Gassensor (10, 12), welcher ein für den Grad der Verschmutzung der Umgebungsluft repräsentatives Signal (R, O) erzeugt und einer elektronischen Schaltung, welche auf das genannte Signal reagiert indem sie auf die Steuereinheit der Lüfterklappe wirkt, um ein Eindringen der Luft, welche einen gegebenen Verschmutzungsgrad überschreitet, zu verhindern, **dadurch gekennzeichnet, dass** die genannte Schaltung ausgebildet ist mit:
• Mitteln, um in regelmäßigen Intervallen die Signalamplitude (R, O), welche vom Sensor geliefert wird, zu messen.
• Mitteln, um einen ersten Referenzwert, bestehend aus dem Mittelwert (SMR, SMO) der genannten Messungen über ein erstes Zeitintervall, in der Folge kurzer Mittelwert genannt, sowie einen zweiten Referenzwert, bestehend aus einem zweiten Mittelwert (LMR, LMO) der genannten Messungen über ein zweites Zeitintervall, welches größer ist als das erste, in der Folge langer Mittelwert genannt, zu berechnen.
• Mitteln, um eine erste Abweichung (ΔSR, ΔSO) zwischen jeder Messung und dem kurzen Mittelwert (SMR, SMO), als auch eine zweite Abweichung (ΔLR, ΔLO) zwischen jeder Messung und dem langen Mittelwert (LMR, LMO), zu berechnen.
• Entscheidungsmitteln, um die genannten ersten (ΔSR, ΔSO) und zweiten Abweichungen (ΔLR, ΔLO) mit Schwellwerten (SCR, LCR, SCO, LCO, LOR, LOO) zu vergleichen und um, entsprechend dem Ergebnis des Vergleichs, einen Befehl zum Öffnen oder zum Schließen der Lüfterklappe an die genannte Steuereinheit zu senden.

2. System nach Anspruch 1, **dadurch gekennzeichnet, dass** die genannten Entscheidungsmittel ausgebildet sind um die folgenden Schritte nacheinander auszuführen:
• Senden eines Befehls zum Schließen der Lüfterklappe, falls die erste Abweichung (ΔSR, ΔSO) einen ersten Schwellwert (SCR, SCO) überschreitet oder falls die zweite Abweichung (ΔLR, ΔLO) einen zweiten Schwellwert (LCR, LCO) überschreitet, wobei die beiden Schwellwerte einem inakzeptablen Anstieg der Verschmutzung entsprechen,
• Senden eines Befehls zum Öffnen der Lüfterklappe, falls die erste Abweichung (ΔSR, ΔSO) den genannten ersten Schwellwert (SCR, SCO) nicht überschreitet und falls die zweite Abweichung (ΔLR, ΔLO) den genannten zweiten Schwellwert (LCR, LCO) nicht überschreitet und falls die zweite Abweichung (ΔLR, ΔLO) einen dritten Schwellwert (LOR, LOO) überschreitet, welche einer akzeptablen Abnahme der Verschmutzung entspricht,
• Senden eines Befehls zum Halten der Lüfterklappe in ihrem Zustand, falls die erste Abweichung (ΔSR, ΔSO) den genannten ersten Schwellwert (SCR, SCO) nicht überschreitet und falls die zweite Abweichung (ΔLR, ΔLO) den genannten zweiten Schwellwert (LCR, LCO) nicht überschreitet und falls die zweite Abweichung (ΔLR, ΔLO) den genannten dritten Schwellwert (LOR, LOO) nicht überschreitet.

3. System nach einem der Ansprüche 1 oder 2, **dadurch gekennzeichnet, dass** die genannten Intervalle bei denen die Amplitude des vom Detektor gelieferten Signals (R, O) gemessen wird, 100 ms betragen.

4. System nach Anspruch 3, **dadurch gekennzeichnet, dass** das genannte erste Zeitintervall 3,2 s und das genannte zweite Zeitintervall 12,8 s beträgt.

5. System nach Ansprüchen 1 bis 4, **dadurch gekennzeichnet, dass** es einen Gassensor zum Detektieren von reduzierenden Gasen und einen Gassensor zum Detektieren von oxidierenden Gasen enthält.

## Claims

1. Vehicle ventilation control system including at least a gas sensor (10, 12) delivering a signal (R, O) indicating the level of pollution in the ambient air and an electronic circuit (14, 16) responding to said signal by acting on the control unit of the flap for the admission of air in the vehicle (26) in such a way as to avoid the entry of ambient air if the pollution detected exceeds a certain level, **characterized by** the fact that said circuit includes :
• means for obtaining, at regular intervals, measurements of the amplitude of the signal (R, O) delivered by the sensor,
• means for calculating a first reference value (SMR, SMO), called the short average, which represents the average of said measurements over a first time interval, and a second reference value (LMR, LMO), called the long average, which represents the average of said measurements over a second time interval, which is longer than the first time interval,
• means for computing a first initial variance (ΔSR, ΔSO) between each measurement and the short average (SMR, SMO), as well as a second variance (ΔLR, ΔLO) between each measurement and the long average (LMR, LMO), and
• decision means for comparing said first (ΔSR, ΔSO) and second (ΔLR, ΔLO) variances with threshold values (SCR, LCR, SCO, LCO, LOR and LOO) and, according to the result of the comparisons, sending to said control unit an order to either open or close the air admission flap.

2. The system of claim 1, **characterized by** the fact that said decision means is designed to perform, in the order given, the following actions :
• send an order to close the flaps if the first variance (ΔSR, ΔSO) exceeds a first threshold value (SCR, SCO) or if the second variance (ΔLR, ΔLO) exceeds a second threshold value (LCR, LCO), those two threshold values corresponding to an unacceptable increase in pollution,
• send an order to open the flap if the first variance (ΔSR, ΔSO) does not exceed the first threshold value (SCR, SCO) and if the second variance (ΔLR, ΔLO) does not exceed the second threshold value (LCR, LCO) and, then, if the second variance (ΔLR, ΔLO) exceeds a third threshold value (LOR, LOO) corresponding to an acceptable decrease in pollution, and
• send an order to keep the flap in its current position if the initial variance (ΔSR, ΔSO) does not exceed the initial threshold value (SCR, SCO), and if the second variance (ΔLR, ΔLO) does not exceed the second threshold value (LCR, LCO), and, then, if the second variance (ΔLR, ΔLO) does not exceed the third threshold value (LOR, LOO).

3. The system of claims 1 or 2, **characterized by** the fact that the measurements of the amplitude of the signal (R, O) are obtained over intervals of 100 ms.

4. The system of claim 3, **characterized by** the fact that said first interval is 3.2 s and said second interval is 12.8 s.

5. The system of any of claims 1 through 4, **characterized by** the fact that it comprises a reducing gas sensor and an oxidizing gas sensor.
